# EUROPEAN PATENT SPECIFICATION

(11) **EP 1 542 895 B1**
(45) Date of publication and mention of the grant of the patent: **17.12.2008**
(21) Application number: 03795071.4
(22) Date of filing: 09.09.2003
(51) Int. Cl.: B62D 1/184

(54) **CLAMPING APPARATUS FOR ADJUSTABLE STEERING COLUMN FOR A VEHICLE**
KLEMMVORRICHTUNG F R EINSTELLBARE LENKSûULE F R EIN FAHRZEUG
APPAREIL DE SERRAGE POUR UNE COLONNE DE DIRECTION REGLABLE D'UN VEHICULE

(30) Priority: 10.09.2002 GB 0220950
(43) Date of publication of application: 22.06.2005
(73) Proprietor: NSK Steering Systems Europe Limited, Maidenhead, Berkshire SL6 6TB (GB)
(72) Inventor: ALI, Mohammed NSK Steering Systems Europe Limited, Coventry CV6 6PA (GB); MORIYAMA, Seiichi, Maebashi-shi Gunma (JP)
(74) Representative: Feakins, Graham Allan
(86) International application number: PCT/GB2003/003903
(87) International publication number: WO 2004/024534

(56) References cited:
- EP-A- 0 019 571
- WO-A-01/28710
- GB-A- 401 718

## Description

This invention relates to a clamping apparatus for an adjustable steering column for a vehicle, as e.g. known from WO 0 128 710 A or EP 1 332 942 A2. Space factors are often needed to be taken into account when constructing steering column assemblies, particularly in the region of the driver of a vehicle, where steering column clamping mechanisms are generally located.

According to the present invention, there is provided a clamping apparatus for an adjustable steering column for a vehicle, the clamping apparatus including at least two, relatively slidable plates that can be clamped relatively to one another, the two plates having relatively slidable, clamping surfaces that contact one another; characterised in that the respective clamping surfaces of the two plates are made of material of different hardness, with one of the plates being made of mild steel and the other plate being made of mild aluminium or aluminium alloys.

One of the plates may be used in connection with reach adjustment of the steering column and the other plate may be used in connection with rake adjustment of the steering column. However, both plates could form part of the reach adjustment or part of the rake adjustment apparatus.

More than one plate of each type may be provided to form a pack of clamping plates. In such a case, it is intended that alternate plates will be of different hardnesses.

The invention also extends to an adjustable steering column for a vehicle incorporating a clamping apparatus essentially as defined above.

Of course, the invention also extends to a vehicle incorporating such an adjustable steering column, which may be rake and/or reach adjustable.

For a better understanding of the invention and to show how the same may be carried into effect, reference will now be made, by way of example, to the accompanying drawings, in which:-
Fig. 1 is a diagrammatic exploded perspective view of part of a clamping apparatus for an adjustable steering column for a vehicle; and
Fig. 2 is a chart comparing the use of clamping plates made of standard mild steel alone with clamping plates made of a combination of soft and hard materials, such as alternate plates being made of mild steel and mild aluminium, respectively.

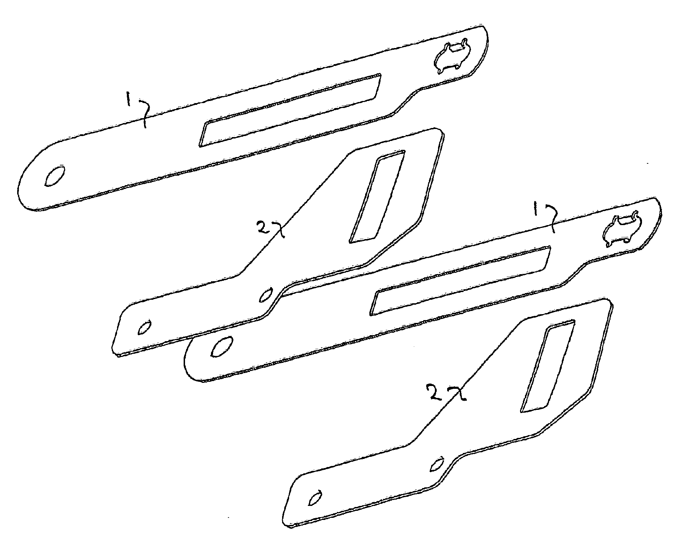

Referring to the drawings, Fig. 1 shows a pair of clamping plates 1, which in the example shown are used for reach adjustment of a steering column (not shown) in combination with a pair of clamping plates 2 which in the example shown are used for rake adjustment of the steering column. As is clearly seen, the plates and 2 are alternately disposed relatively to one another.

To provide the required soft-hard combination, the plates 1 are made of a comparatively soft material -aluminium or aluminium alloy- whilst the plates 2 are made of a comparatively harder material - mild steel.

When the plates are clamped together to form a clamping pack, the oppositely-facing surfaces of the plates naturally contact one another. Any number of plates can be provided. Normally, one pack of plates would be provided on one side of a steering column and another would be provided on the opposite side of the column.

When the plates are in their clamped condition, the surfaces of the tougher material on the plates 2 contact the surfaces of the softer material of the plates 1 and this creates increased friction through the clamping system and as a result of the differences in the hardness of the surfaces.

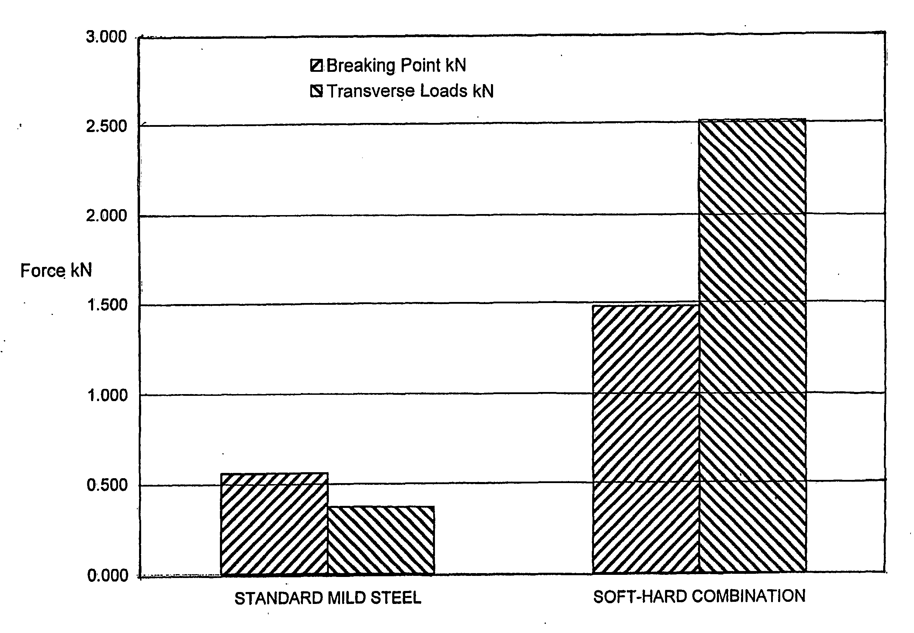

With the material used being mild aluminium with mild steel between the reach and rake adjustment plates, when the plates are in a clamped condition during vehicle crash, the plates begin relative sliding movement and the aluminium begins to shear on the surface of the plate 1 due to the action of the tougher mild steel material of the plate 2. This has the tendency to increase or provide a build-up of aluminium material, which in turn increases the clamping load. This in turn adds to the friction and stiction performance as illustrated in the chart shown in Fig. 2.

The table shown below provides some figures that have been obtained under test.

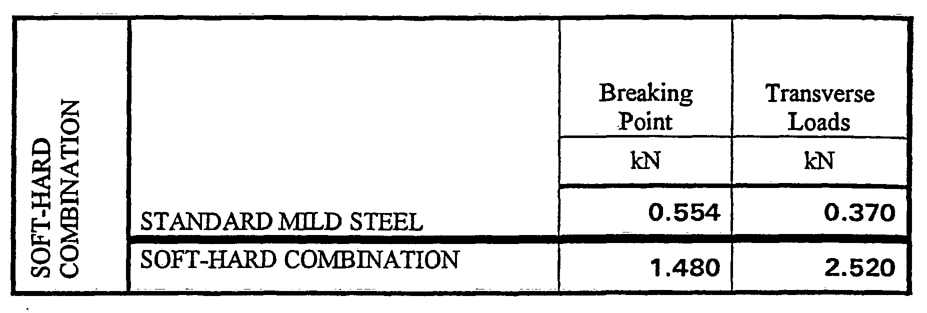

It will be appreciated that with the use of soft and hard materials for the plates 1 and 2, the number of and even thickness of the reach and rake plates can be modified, especially since a friction coating on the plates need not be provided. This means that the packaging size of the clamping mechanism can be reduced as can be the weight of the mechanism.

## Claims

1. A clamping apparatus for an adjustable steering column for a vehicle, the clamping apparatus including at least two, relatively slidable plates that can be clamped relatively to one another, the two plates having relatively slidable, clamping surfaces that contact one another; **characterised in that** the respective clamping surfaces of the two plates are made of material of different hardnesses, with one of the plates being made of mild steel and the other of the plates being made of mild aluminium or aluminium alloy.

2. An apparatus according to claim 1, wherein one of the plates is used in connection with reach adjustment of the steering column.

3. An apparatus according to claim 1 or 2, wherein one of the plates is used in connection with rake adjustment of the steering column.

4. An adjustable steering column for a vehicle incorporating a clamping apparatus according to any one of the preceding claims.

5. An adjustable steering column according to claim 6, which is rake and/or reach adjustable.

6. A vehicle incorporating an adjustable steering column according to claim 4 or 5.

## Patentansprüche

1. Klemmvorrichtung für eine einstellbare Lenksäule für ein Fahrzeug, wobei die Klemmvorrichtung mindestens zwei, relativ zueinander verschiebbare Platten aufweist, die relativ zueinander festgeklemmt werden können, wobei die zwei Platten relativ zueinander verschiebbare Klemmflächen aufweisen, die einander berühren; **dadurch gekennzeichnet, daß** die Klemmflächen der zwei Platten aus Materialien unterschiedlicher Härte hergestellt sind, wobei eine der Platten aus einem weichen Stahl und die andere der Platten aus einem weichen Aluminium oder einer Aluminiumlegierung hergestellt ist.

2. Vorrichtung nach Anspruch 1, wobei eine der Platten in Verbindung mit einer Reichweiteneinstellung der Lenksäule verwendet wird.

3. Vorrichtung nach Anspruch 1 oder 2, wobei eine der Platten in Verbindung mit einer Neigungseinstellung der Lenksäule verwendet wird.

4. Einstellbare Lenksäule für ein Fahrzeug, die eine Klemmvorrichtung nach einem der vorhergehenden Ansprüche aufweist.

5. Einstellbare Lenksäule nach Anspruch 4, wobei sie in der Neigung und/oder der Reichweite einstellbar ist.

6. Fahrzeug, das eine einstellbare Lenksäule nach Anspruch 4 oder 5 aufweist.

## Revendications

1. Dispositif de serrage pour une colonne de direction réglable pour un véhicule, le dispositif de serrage incluant au moins deux plaques pouvant coulisser relativement l'une à l'autre qui peuvent être serrées ensemble, les deux plaques ayant des surfaces de serrage pouvant coulisser l'une par rapport à l'autre qui entrent en contact ensemble ; **caractérisé en ce que** les surfaces de serrage respectives des deux plaques sont faites de matériaux de duretés différentes, l'une des plaques étant faite d'aluminium doux ou d'alliage d'aluminium.

2. Dispositif selon la revendication 1, dans lequel l'une des plaques est utilisée en liaison avec le réglage en hauteur de la colonne de direction.

3. Dispositif selon la revendication 1 ou 2, dans lequel l'une des plaques est utilisée en liaison avec un réglage angulaire de la colonne de direction.

4. Colonne de direction réglable pour un véhicule incorporant un dispositif de serrage selon l'une quelconque des revendications précédentes.

5. Colonne de direction réglable selon la revendication 6, qui peut être réglé en hauteur et/ou angulairement.

6. Véhicule incorporant une colonne de direction réglable selon la revendication 4 ou 5.
